# EUROPÄISCHE PATENTSCHRIFT

(11) **EP 1 400 399 B1**
(45) Veröffentlichungstag und Bekanntmachung des Hinweises auf die Patenterteilung: **27.07.2005**
(21) Anmeldenummer: 02020938.3
(22) Anmeldetag: 19.09.2002
(51) Int. Cl.: B60N 2/36, B60N 2/02

(54) **Sitzanordnung für Fahrzeuge**
Vehicle seat arrangement
Agencement de sièges de véhicules

(43) Veröffentlichungstag der Anmeldung: 24.03.2004
(73) Patentinhaber: Ford Global Technologies, LLC, Dearborn, MI 48126 (US)
(72) Erfinder: Kumlali, Irfan, 50733 Köln (DE)
(74) Vertreter: Drömer, Hans-Carsten, Dipl.-Ing.

(56) Entgegenhaltungen:
- DE-C- 10 017 059
- US-A- 5 492 386
- US-A1- 2001 050 501
- PATENT ABSTRACTS OF JAPAN vol. 017, no. 414 (M-1456), 3. August 1993 (1993-08-03) -& JP 05 085238 A (MAZDA MOTOR CORP), 6. April 1993 (1993-04-06)

## Beschreibung

Die Erfindung bezieht sich auf eine Sitzanordnung für Fahrzeuge, insb. für Kraftfahrzeuge, mit drei hintereinander angeordneten, aus wenigstens zwei nebeneinander liegenden Sitzen bestehenden Sitzreihen, wobei die Sitze jeweils ein Sitzteil und eine Rückenlehne aufweisen, welche gelenkig miteinander verbunden sind, wobei die Rückenlehne in verschiedenen, bevorzugt im wesentlichen vertikalen Gebrauchslagen verriegelbar bzw. arretierbar ist, bei der zur Vergrößerung des Laderaumes die Sitze der beiden hinteren Sitzreihen und, wahlweise, der/die Sitz(e) der vorderen Sitzreihe, die nicht den Fahrersitz bilden, klappbar ausgebildet sind, wobei die zusammengeklappten Sitzelemente aus ihrer Gebrauchsstellung für eine Sitzposition in ihre Nichtgebrauchsstellung für eine Beladungsposition überführbar ausgebildet sind, wobei die sich auf dem Laderaumboden des Fahrzeuges befindlichen Sitze der hinteren Sitzreihe von einer Gebrauchsstellung auf dem Laderaumboden in eine zusammengeklappte Nichtgebrauchsstellung auf dem Fahrzeugboden überführbar ausgebildet sind.

Aus dem Stand der Technik sind verschiedene Sitzanordnungen für Fahrzeuge, insb. für Kraftfahrzeuge der gattungsgemäßen Art wie z.B. die US 5 492 386 A bekannt. Es ist bei diesen Sitzanordnungen insb. bei einer Ausbildung als Van grundsätzlich das Ziel, ein Sitzkonzept für eine variable Innenraumnutzung dieses Fahrzeuges bereitzustellen, so z.B. für einen 6- Sitzer, mit dem Ziel eines weitgehend ebenen Stauraumes durch Verstauung von z.B. 5 Sitzen im Fahrzeug.

Es ist dazu aus dem Stand der Technik z.B. aus der DE 100 17 059 C1 eine Sitzanordnung für Fahrzeuge bekannt mit drei hintereinander angeordneten, aus mindestens zwei nebeneinander liegenden Sitzen mit Sitzkissen und Rückenlehne zusammengesetzten Sitzreihen, bei der zur Laderaumvergrößerung die Sitze der beiden hinteren Sitzreihen klappbar sind und hierzu die an den Sitzkissen angelenkten Rückenlehnen der Sitze in der zweiten Sitzreihe auf die zugehörigen Sitzkissen aufklappbar und die Sitzkissen nach vom verschiebbar sind. Zur Erzielung einer ebenen Ladefläche unabhängig von der designerischen Gestaltung der Rückseite der Rückenlehne der Sitze in der zweiten Sitzreihe sind bei den Sitzen in der dritten Sitzreihe die Sitzkissen um eine vordere Schwenkachse um 180° und die Rückenlehnen um eine an der Lehnenunterkante festgelegte Schwenkachse um 90° jeweils nach vorn schwenkbar sowie auf den Unterseiten der Sitzkissen flache Platten so angeordnet, daß diese auf die Rückseiten der abgeklappten Rückenlehnen der zweiten Sitzreihe auflegbar sind. Es können dabei bei einer Ausführungsform die Sitze in der zweiten Sitzreihe, z.B. mittels einer parallelogrammartigen Kinematik, absenkbar so ausgebildet sein, daß nach Aufklappen der Rückenlehne der zweiten Sitzreihe auf die Sitzkissen die Rückseiten der Rückenlehnen auf dem Niveau der Unterseiten der nach vom geklappten Sitzkissen der Sitze in der dritten Sitzreihe liegen. Bei einer anderen Ausführungsform dieser Sitzanordnung ist vorgesehen, daß die Sitze der letzten Sitzreihe gegenüber den abgesenkten Sitzen der zweiten Sitzreihe erhöht plaziert sind und daß die Erhöhung so vorgenommen ist, daß die Sitzkissenoberfläche der Sitze in der dritten Sitzreihe mit der Oberfläche des Lehnenrückens der auf das zugeordnete Sitzkissen abgeklappten Rückenlehne des Sitzes in der zweiten Sitzreihe in etwa fluchtet. Gemäß einer weiteren Ausbildung ist vorgesehen, daß die Platte des Sitzkissens des Sitzes der dritten Sitzreihe um eine an der hinteren Sitzkissenkante festgelegte, quer zur Fahrzeuglängsrichtung verlaufende Schwenkachse um 180° schwenkbar gehalten ist. Bei einer anderen Ausführung ist vorgesehen, daß die Platte an der Unterseite des Sitzkissens längsverschiebbar geführt und über die hintere Sitzkissenkante vorschiebbar ist. Dabei kann an der Platte eine Ausziehplatte verschiebbar gehalten sein, die innerhalb der Plattenkontur der Platte aufgenommen und relativ zur Platte in oder quer zur Fahrzeuglängsrichtung teleskopartig ausschiebbar ist. Es soll mit einer derart ausgebildeten Sitzanordnung ermöglicht werden, zum Zwecke der Laderaumvergrößerung eine ebene Ladefläche durch Wegklappen der Sitze der zweiten und dritten Sitzreihe zu realisieren, ohne der designerischen Gestaltung der Rückseiten der Rückenlehnen der Sitze in der zweiten Sitzreihe technischen Zwängen, wie sie von einer ebenen Ladefläche gefordert werden, zu unterwerfen. Nachteilig ist bei dieser Anordnung insb. der recht hohe konstruktive Aufwand i.w. der Ausbildung der Sitzelemente für die dritte Sitzreihe, bei denen auch zusätzliche, normalerweise an sich nicht benötigte Bauelemente verwendet werden. Weiterhin nachteilig ist die umständliche Handhabung für die Bereitstellung einer ebenen Ladefläche und deren nur eingeschränkte Einsetzbarkeit, so wird es insb. im Verbindungsbereich der an der Unterseite des Sitzkissens des Sitzes der dritten Sitzreihe befindlichen Platte kaum möglich sein, schwerere Gewichte auf die erweiterte Ladefläche aufzubringen, ohne Beschädigungen an der beschriebenen Konstruktion herbeizuführen.

Aus dem Stand der Technik ist weiterhin aus der DE 44 22 920 A1 eine Sitzanordnung, insb. für den Lade- bzw. Fahrgastraum eines Kraftfahrzeuges, bekannt, mit mindestens einem Sitz, welcher zumindest ein Sitzteil mit einer in der etwa vertikalen Gebrauchslage am Fahrzeugaufbau verriegelbaren Rückenlehne aufweist, es ist dabei eine im vorderen Bereich des Sitzteiles angeordnete Querachse in einer etwa waagrechten Ebene nach hinten verschiebbar ausgebildet, wobei zumindest das Sitzteil in der nach vorn geschwenkten und nach hinten geschobenen Position des Sitzes mit seiner Rückfläche mit dem Fahrzeugboden eine annähernd ebene Fläche bildet. Es ist dabei bei einer Ausführungsform vorgesehen, daß die mittels eines Drehgelenkes mit dem Sitzteil schwenkbar verbundene Rückenlehne in einer nach vorn geschwenkten Position mit ihrer Rückenlehne gemeinsam mit der Rückfläche des Sitzteiles eine annähernd ebene Fläche bildet. Weiterhin können am Fahrzeugboden Vertiefungen zur Aufnahme von Sitzteil und Rückenlehne in der Nichtgebrauchslage vorgesehen sein, wobei die Vertiefung für das Sitzteil unter dem aufgestellten Sitz angeordnet ist. Mit einer derartigen Anordnung wird an sich der Vorteil erzielt, daß der umklappbare Sitz als ein komfortabler Sitz mit einer Kopfstütze ausgebildet werden kann, der in der Nichtgebrauchslage in relativ flache Vertiefungen am Fahrzeugboden versenkbar ist. Dabei kann die mittels eines Drehgelenkes mit dem Sitzteil schwenkbar verbundene Rückenlehne mit ihrer Rückfläche gemeinsam mit der Rückfläche des Sitzteiles eine annähernd ebene Fläche bilden. Auch bei dieser Anordnung ist insb. der hohe konstruktive Aufwand des umklappbaren Sitzelementes nachteilig, sowie auch wiederum die umständliche Handhabung für die Bereitstellung einer ebenen Ladefläche und die eingeschränkte Einsetzbarkeit dieser Sitzanordnung, es ist hier insb. eine bessere Einbeziehung der anderen in dem Fahrzeug befindlichen Sitzelemente zur Bildung einer ebenen Ladefläche wünschenswert.

Aus dem Stand der Technik ist schließlich noch aus der US-PS 4 932 709 eine Sitzanordnung bekannt, bei der ebenfalls bei allen Sitzen der zweiten und dritten Sitzreihe die Rückenlehnen an den Sitzkissen angelenkt und auf diese aufklappbar sind. Zusätzlich sind die Sitzkissen der Sitze in der dritten Sitzreihe um eine quer zur Fahrzeuglängsrichtung sich erstreckende fahrzeugfeste Schwenkachse um 180° nach vorn schwenkbar. Sind die Sitze in der zweiten und dritten Sitzreihe zwecks Laderaumvergrößerung abgeklappt, so bilden die Rückseiten der Rückenlehne der Sitze in der zweiten Sitzreihe und die Unterseite der Sitzkissen der Sitze in der dritten Sitzreihe mit dem gegenüber dem Fußraum erhöhten Laderaumboden im Heck des Fahrzeuges eine durchgehend ebene Ladefläche. Nachteilig bei dieser Anordnung ist, daß, um eine solche ebene Ladefläche zu realisieren, die Rückseiten der Rückenlehne der Sitze in der zweiten Sitzreihe eben ausgebildet sein müssen, so daß für eine designerische Gestaltung der Rückseiten der Rückenlehne zwecks Verbesserung des optischen Erscheinungsbildes für die auf den Sitzen in der dritten Sitzreihe plazierten Insassen kein Raum gegeben ist; diese Anordnung bildet den Ausgangspunkt für die in der oben erwähnten DE 100 17 059 C1 beschriebene Anordnung, die insoweit eine Weiterentwicklung der in dieser US-PS 4 932 709 beschriebenen Anordnung darstellt.

Aus dem Stand der Technik sind außerdem solche als Van's ausgebildete Fahrzeuge bekannt, bei denen die zweite Sitzreihe 3- sitzig ausgelegt ist. Derartige Ausführungen haben zum einen einen schlechten Luftwiderstand, vor allem durch die erforderliche Fahrzeugbreite, so daß der Verbrauch bei höheren Geschwindigkeiten stark ansteigt, zum anderen sind diese Art von Van's zur Erreichung eines großen Laderaumvolumens oft sehr hoch ausgebildet, da die Innenraumhöhe i.w. gleich der Laderaumhöhe ist. Daraus ergibt sich wieder, insbesondere verursacht durch die erforderliche Fahrzeughöhe, ein schlechter Luftwiderstand, eine nur eingeschränkte Fahrdynamik und auch wieder ein stark ansteigender Verbrauch bei höheren Geschwindigkeiten. Bei anderen bekannten Sitzanordnungen z.B. für Van's müssen je nach Beladungsbedarf die Sitze des Fahrzeuges ausgebaut werden, was zu Schwierigkeiten mit deren Verstauung führt. Im übrigen besteht bei Van- Fahrzeugen allgemein das Problem, daß diese oft zu schwer sind, wodurch große Motoren für die gewünschten Fahrleistungen benötigt werden und demzufolge der Verbrauch dieser Fahrzeuge insb. im innerstädtischen Bereich extrem ansteigt.

Ausgehend von diesen bekannten Sitzanordnungen liegt der Erfindung die Aufgabe zugrunde, die bekannten Anordnungen unter Beibehaltung der bisherigen Vorteile in der Weise zu verbessern bzw. weiterzuentwickeln, daß die oben beschriebenen Nachteile vermieden werden, es soll dabei insb. eine Sitzanordnung geschaffen werden, die die variable Innenraumnutzung insb. für 6- Sitzer mit dem Ziel eines ebenen Stauraumes durch Verstauung von 5 Sitzen im Fahrzeug vereinfacht bzw. verbessert. Die gewünschte Anordnung soll dabei insb. einfach zu handhaben sein, sowie einfach aufgebaut und kostengünstig herstellbar sein.

Die Aufgabe wird erfindungsgemäß dadurch gelöst, daß die zusammenklappbaren Sitze der ersten und zweiten Sitzreihe auf im wesentlichen in Längsrichtung verschiebbaren Grundträgerelementen angeordnet sind, wobei die zusammenklappbaren Sitzelemente von den verschiebbaren Grundträgerelementen leicht lösbar und auf dem Fahrzeugboden fixierbar ausgebildet sind, und daß die Grundträgerelemente über die zusammengeklappten auf dem Fahrzeugboden fixierten Sitzelemente der ersten und zweiten Sitzreihe verschiebbar ausgebildet sind, wobei die Grundträgerelemente dabei gleichzeitig einen Stauraum für die zusammengeklappten Sitzelemente der ersten und zweiten Sitzreihe und, oberseitig, einen Teil des erweiterten Laderaumbodens bilden. Mit einer derartigen Sitzanordnung wird die variable Innenraumnutzung insb. für 6- Sitzer unter Erzielung eines ebenen Stauraumes durch Verstauung von 5 Sitzen im Fahrzeug gegenüber den bekannten Lösungen stark vereinfacht bzw. verbessert. Die zusammenklappbar ausgebildeten Sitze der ersten und zweiten Sitzreihe sind auf einfachen, i.w. in Längsrichtung verschiebaren Grundträgerelementen angeordnet, sind von diesen leicht lösbar und auf dem Fahrzeugboden befestigbar, so daß die Grundträgerelemente über die zusammengeklappten Sitzelemente verschoben werden können, wobei sie einerseits einen Stauraum für diese bilden und andererseits oberseitig einen Teil des erweiterten Laderaumbodens bilden. Diese Ausbildung ermöglicht eine hinsichtlich der Fahrzeugbreite und -höhe und des Fahrzeuggewichtes vorteilhaftere Ausbildung der betreffenden Fahrzeuge, wie z.B. Van's, ist einfach und kostengünstig herstellbar und einfach zu handhaben.

Bei der bevorzugten Ausführungsform der vorliegenden Erfindung sind die zusammenklappbaren Sitze der ersten und zweiten Sitzreihe auf im wesentlichen in Längsrichtung verschiebbaren, baugleichen Grundträgerelementen angeordnet. Eine Verwendung von baugleichen Grundträgerelementen ist in fertigungstechnischer Hinsicht besonders vorteilhaft.

Nach einem weiteren Ausgestaltungsmerkmal der vorliegenden Erfindung ist vorgesehen, daß die Rückenlehnen der Sitze der hinteren Sitzreihe auf ihrer Rückseite eine im wesentlichen stabile Ausbildung aufweisen und in der zusammengeklappten Nichtgebrauchsstellung des Sitzes einen Teil des erweiterten Laderaumbodens bilden. Dies ist eine konstruktiv einfache Ausbildung dieses Teiles des erweiterten Laderaumbodens ohne die Verwendung von zusätzlichen Bauelementen.

Es empfiehlt sich dabei nach einem weiteren Ausgestaltungsmerkmal der vorliegenden Erfindung, daß die Sitze der hinteren Sitzreihe in ihrer zusammengeklappten Nichtgebrauchsstellung im wesentlichen hinter den Sitzen der zweiten Sitzreihe, bezogen auf deren Gebrauchsstellung, auf dem Fahrzeugboden befestigbar ausgebildet sind. Auf diese Weise kann das jeweils zusammengeklappte Sitzelement der hinteren Sitzreihe in Nichtgebrauchsstellung in einfacher Weise direkt vor dessen Gebrauchsposition liegend auf dem Fahrzeugboden befestigt werden. In ähnlicher Weise empfiehlt es sich nach einem weiteren Vorschlag der vorliegenden Erfindung, daß die Sitze der zweiten Sitzreihe in ihrer zusammengeklappten Nichtgebrauchsstellung im wesentlichen vor den Sitzen dieser zweiten Sitzreihe, bezogen auf deren Gebrauchsstellung, auf dem Fahrzeugboden befestigbar ausgebildet sind. Weiterhin ist vorgesehen, daß die Sitze der ersten Sitzreihe in ihrer zusammengeklappten Nichtgebrauchsstellung im wesentlichen vor den Sitzen dieser ersten Sitzreihe, bezogen auf deren Gebrauchsstellung, auf dem Fahrzeugboden befestigbar ausgebildet sind. Mit diesen Ausgestaltungsmerkmalen ist insgesamt eine sehr einfache und leicht zu handhabende Unterbringung der zusammengeklappten Sitzelemente auf dem Fahrzeugboden möglich.

Nach einem anderen Ausgestaltungsmerkmal der vorliegenden Erfindung empfiehlt es sich, daß zur Abdeckung der Sitze der ersten Sitzreihe in ihrer zusammengeklappten Nichtgebrauchsstellung auf dem Fahrzeugboden an dem entsprechenden Grundträgerelement für den jeweils abgenommenen Sitz der ersten Sitzreihe eine entsprechend dimensionierte Verlängerungsplatte ausgebildet ist. Eine solche Verlängerungsplatte läßt sich auf einfache Weise in das bereits vorhandene Grundträgerelement für die Sitze der ersten Sitzreihe integrieren. Dabei empfiehlt es sich nach einem weiteren Merkmal der vorliegenden Erfindung, daß die zur Abdeckung der Sitze der ersten Sitzreihe in ihrer zusammengeklappten Nichtgebrauchsstellung auf dem Fahrzeugboden dienende Verlängerungsplatte verschiebbar an dem entsprechenden Grundträgerelement für den jeweils abgenommenen Sitz gelagert ist. Es wird dies bevorzugt innenseitig an dem entsprechenden Grundträgerelement erfolgen. Bei einer alternativen Ausführungsform ist nach einem letzten Vorschlag der vorliegenden Erfindung die zur Abdeckung der Sitze der ersten Sitzreihe in ihrer zusammengeklappten Nichtgebrauchsstellung auf dem Fahrzeugboden dienende Verlängerungsplatte verschwenkbar an dem entsprechenden Grundträgerelement für den jeweils abgenommenen Sitz gelagert.

Die Erfindung ist in den Figuren der Zeichnung in einem Ausführungsbeispiel dargestellt. Es zeigen:
- Fig. 1: eine schematische, perspektivische Teil- Ansicht der einzigen Ausführungsform der erfindungsgemäßen Sitzanordnung mit geklappter Rückenlehne eines Sitzes der dritten Sitzreihe;
- Fig.2: die schematische, perspektivische Teil- Ansicht gemäß Fig. 1 mit zusammengeklapptem, von dem Grundträgerelement abgenommenem Sitzelement der zweiten Sitzreihe;
- Fig. 3: die schematische, perspektivische Teil- Ansicht gemäß Fig. 1 mit nach vom verschobenem Grundträgerelement der zweiten Sitzreihe;
- Fig. 4: die schematische, perspektivische Teil- Ansicht gemäß Fig. 1 mit nach vom verschobenem Grundträgerelement der zweiten Sitzreihe und auf dem Fahrzeugboden anzubringendem zusammengeklapptem Sitzelement der dritten Sitzreihe;
- Fig.5: die schematische, perspektivische Teil- Ansicht gemäß Fig. 4 mit zusätzlich abgenommenem zusammengeklapptem Sitzelement der ersten Sitzreihe;
- Fig. 6: die schematische, perspektivische Teil- Ansicht gemäß Fig. 5 mit auf dem Fahrzeugboden befestigten zusammengeklapptem Sitzelement der ersten Sitzreihe und ausgefahrener Verlängerungsplatte, wobei sich eine insgesamt ebene Ladefläche ergibt; und

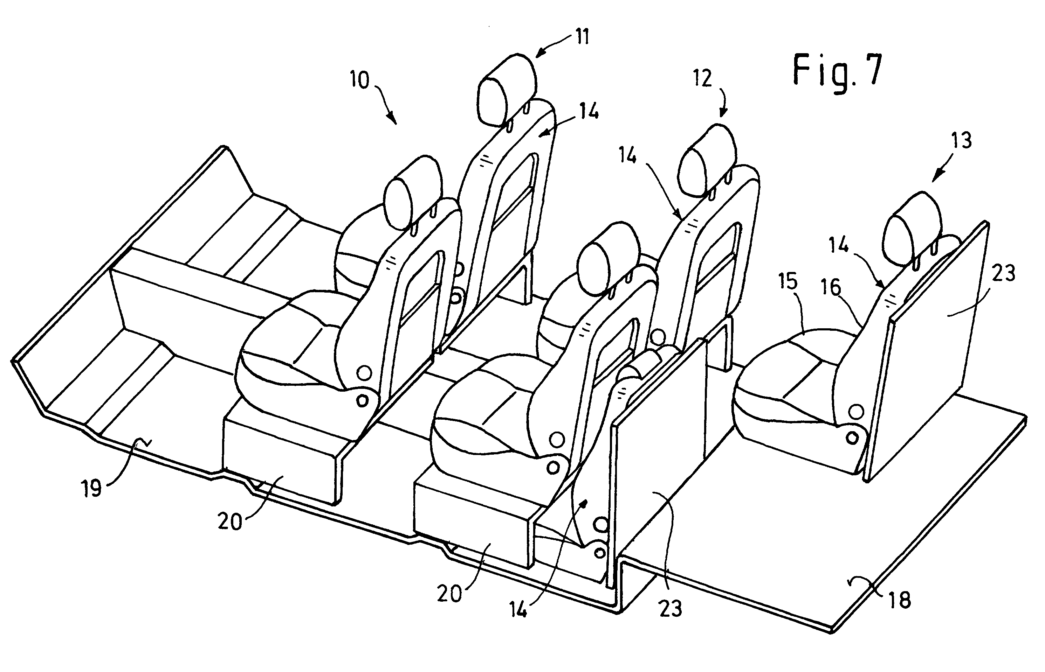

- Fig. 7: die schematische, perspektivische Teil- Ansicht gemäß Fig. 1 mit unter der zweiten Sitzreihe verstauten Sitzteil der dritten Sitzreihe.

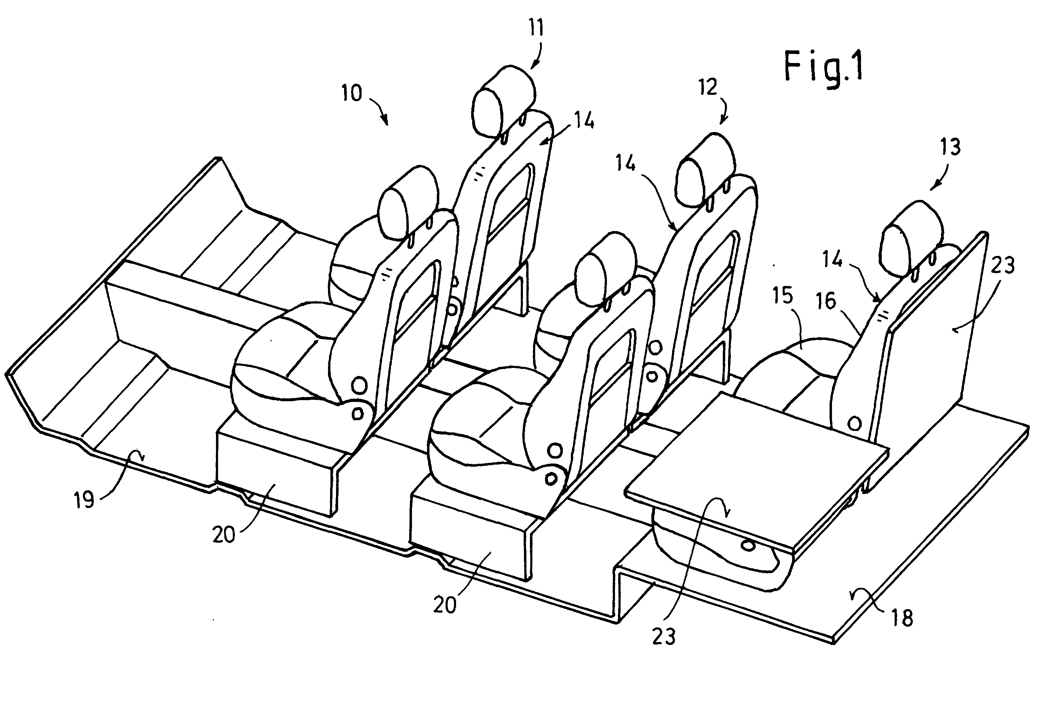

Die erfindungsgemäße Sitzanordnung ist generell mit 10 bezeichnet. Die Sitzanordnung 10 ist vorgesehen für eine Verwendung bei Fahrzeugen, insb. Kraftfahrzeugen, wie z.B. als Van's ausgebildeten Kraftfahrzeugen, mit drei hintereinander angeordneten, aus wenigstens zwei nebeneinander liegenden, mit 14 bezeichneten Sitzen bestehenden Sitzreihen, wobei die erste Sitzreihe mit 11, die zweite Sitzreihe mit 12 und die dritte Sitzreihe mit 13 bezeichnet ist. Es ist dazu in den Fig. 1 bis 6 der Zeichnung eine entsprechende Sitzanordnung 10 eines solchen als z.B. Van ausgebildeten Fahrzeuges jeweils schematisch in perspektivischer Ansicht mit drei hintereinander angeordneten Sitzreihen 11,12 und 13 in verschiedenen Funktionsstellungen dargestellt.

Bei der dargestellten Sitzanordnung 10 weisen die Sitze 14 jeweils ein Sitzteil 15 und eine Rückenlehne 16 auf, welche gelenkig miteinander verbunden sind, wobei die Rückenlehne 16 in verschiedenen, bevorzugt im wesentlichen vertikalen Gebrauchslagen verriegelbar bzw. arretierbar ist. Die dargestellten Sitze 14 weisen außerdem jeweils nicht bezeichnete Kopfstützen auf und können an den Rückseiten ihrer Rückenlehnen 16 mit üblichen Halte- und/oder Ablageeinrichtungen, wie z.B. Ablagenetzen od. dgl., versehen sein.

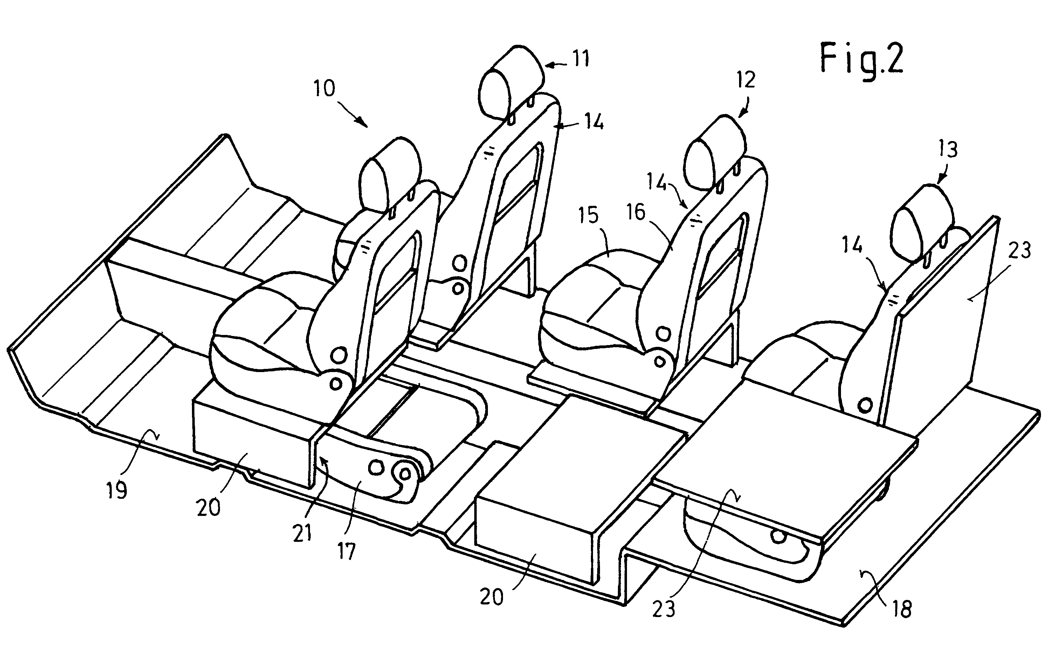

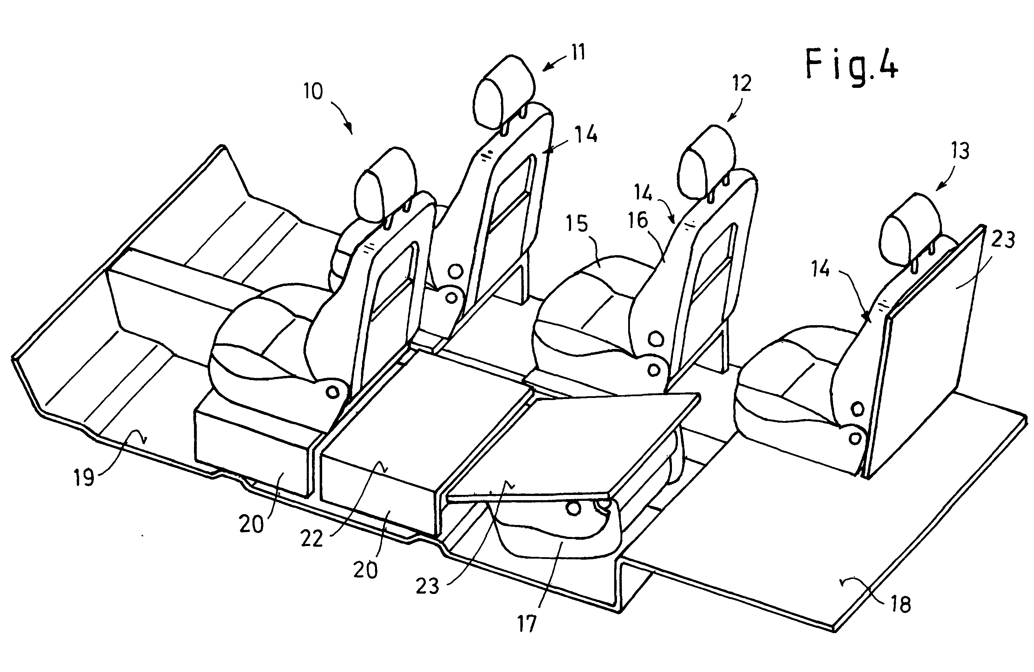

Zur Vergrößerung des Laderaumes sind bei der erfindungsgemäßen Sitzanordnung 10 die Sitze 14 der beiden hinteren Sitzreihen 12,13 und der Sitz 14 der vorderen Sitzreihe 11, der nicht den Fahrersitz bildet, klappbar ausgebildet. Dabei sind die zusammengeklappten Sitzelemente 17 aus ihrer Gebrauchsstellung für eine Sitzposition in ihre Nichtgebrauchsstellung für eine Beladungsposition überführbar ausgebildet, siehe z.B. die Fig. 2 der Zeichnung, wobei die sich auf dem Laderaumboden 18 des Fahrzeuges befindlichen Sitze 14 der hinteren Sitzreihe 13 von einer Gebrauchsstellung auf dem Laderaumboden 18 in eine zusammengeklappte Nichtgebrauchsstellung auf dem Fahrzeugboden 19 überführbar ausgebildet sind, siehe z.B. die Darstellung in der Fig. 4 der Zeichnung.

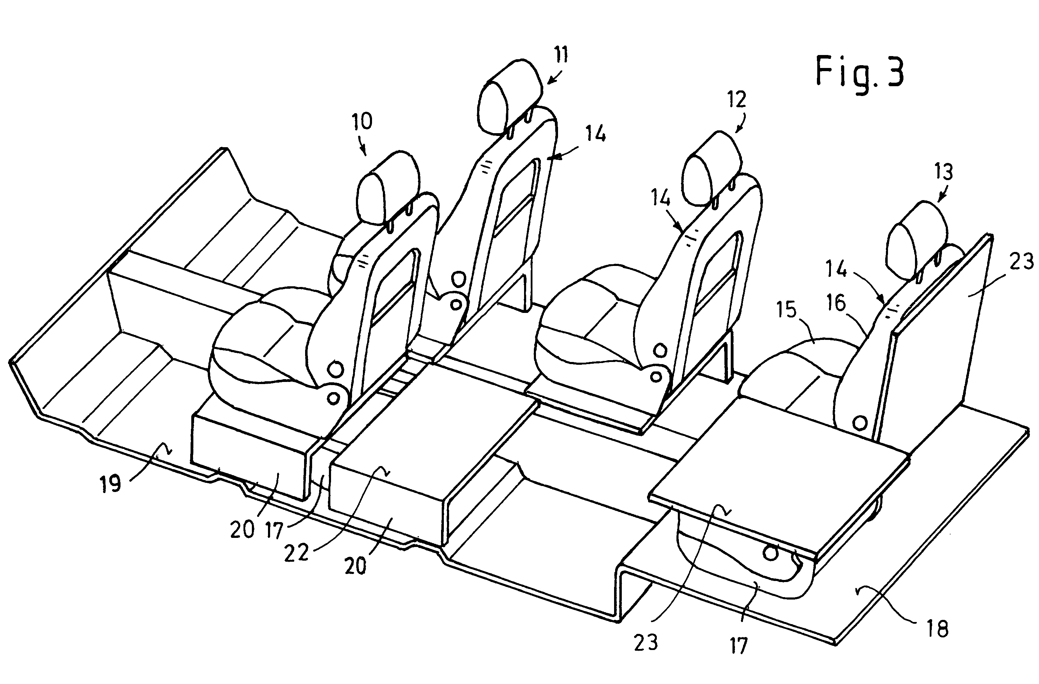

Es ist erfindungsgemäß vorgesehen, daß die zusammenklappbaren Sitze 14 der ersten und zweiten Sitzreihe 11,12 auf im wesentlichen in Längsrichtung verschiebbaren Grundträgerelementen 20 angeordnet sind, siehe die Fig. 1 bis 3 der Zeichnung. Dabei sind die zusammenklappbaren Sitzelemente 17 von den verschiebbaren Grundträgerelementen 20 leicht lösbar und auf dem Fahrzeugboden 19 fixierbar ausgebildet, siehe die Fig. 2 der Zeichnung. Weiterhin sind, siehe die Fig. 3, die Grundträgerelemente 20 über die zusammengeklappten auf dem Fahrzeugboden 19 fixierten Sitzelemente 17 der ersten und zweiten Sitzreihe 11,12 verschiebbar ausgebildet, wobei die Grundträgerelemente 20 dabei gleichzeitig einen Stauraum 21 für die zusammengeklappten Sitzelemente 17 der ersten und zweiten Sitzreihe 11,12 bilden, siehe wieder Fig.2, und, oberseitig, einen Teil des erweiterten Laderaumbodens 22, siehe dazu eine der Fig. 3 oder 4. Es ist dabei in der Fig. 2 der Zeichnung das Grundträgerelement 20 der zweiten Sitzreihe 12 leicht nach hinten verschoben dargestellt, damit das zusammengeklappte Sitzelement 17 problemlos an dem davor liegenden Teil des Fahrzeugbodens 19 befestigt werden kann. Danach wird dann, wie in Fig. 3 dargestellt ist, das Grundträgerelement 20 der zweiten Sitzreihe 12 über das am Fahrzeugboden 19 befindliche zusammengeklappte Sitzelement 17 verschoben.

Bei einer bevorzugten Ausführungsform der erfindungsgemäßen Sitzanordnung 10 sind die zusammenklappbaren Sitze 14 der ersten und zweiten Sitzreihe 11,12 auf im wesentlichen in Längsrichtung verschiebbaren, baugleichen Grundträgerelementen 20 angeordnet, was insb. in fertigungstechnischer Hinsicht Vorteile mit sich bringt.

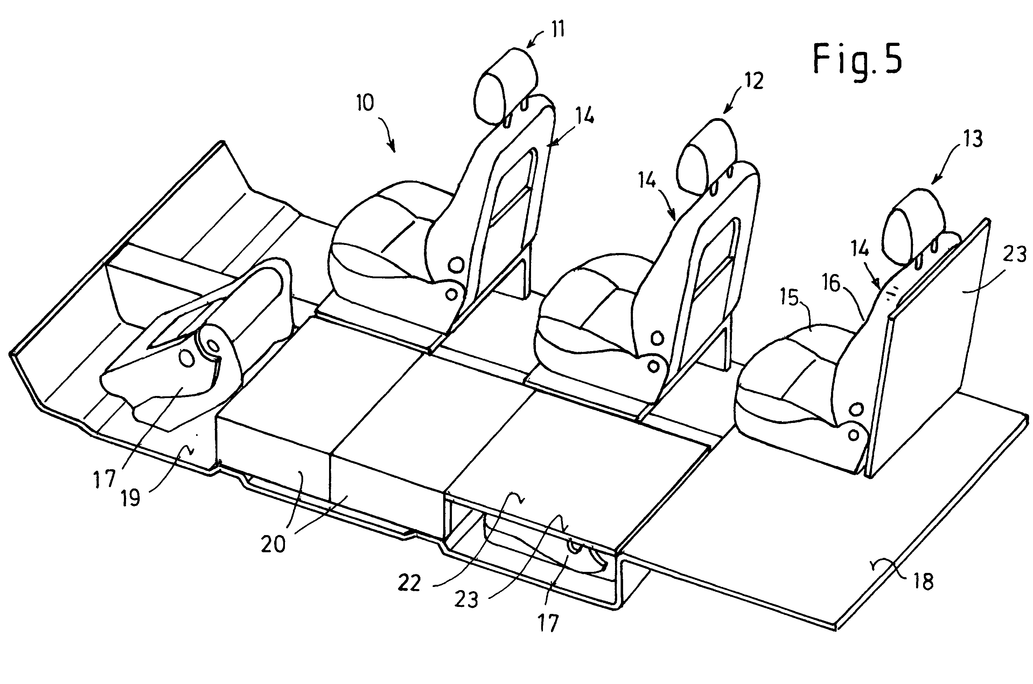

Bei dem dargestellten Ausführungsbeispiel weisen weiterhin die Rückenlehnen 16 der Sitze 14 der hinteren Sitzreihe 13 auf ihrer Rückseite 23 eine im wesentlichen stabile Ausbildung auf und bilden in der zusammengeklappten Nichtgebrauchsstellung des Sitzes 14 einen Teil des erweiterten Laderaumbodens 24, siehe dazu die Fig. 4 und 5 der Zeichnung, in denen u.a. ein am Fahrzeugboden 19 festgelegtes, zusammengeklapptes Sitzelement 17 der dritten Sitzreihe 13 zu sehen ist. Die Sitze 14 der hinteren Sitzreihe 13 sind dabei, siehe wieder die Fig. 4, in ihrer zusammengeklappten Nichtgebrauchsstellung im wesentlichen hinter den Sitzen 14 der zweiten Sitzreihe 12, bezogen auf deren Gebrauchsstellung, auf dem Fahrzeugboden 19 befestigbar ausgebildet. In der Fig. 5 ist dazu der eingesetzte Zustand der zusammengeklappten Nichtgebrauchsstellung dargestellt, in dem die Rückseite 23 der Rücklehne 16 des Sitzes 14 der dritten Sitzreihe 13 einen Teil des erweiterten Laderaumbodens 22 bildet. Weiterhin sind, siehe die Fig. 2, die Sitze 14 der zweiten Sitzreihe 12 in ihrer zusammengeklappten Nichtgebrauchsstellung im wesentlichen vor den Sitzen 14 dieser zweiten Sitzreihe 12, bezogen auf deren Gebrauchsstellung, auf dem Fahrzeugboden 19 befestigbar ausgebildet. Schließlich sind außerdem, siehe Fig. 5, die Sitze 14 der ersten Sitzreihe 11 in ihrer zusammengeklappten Nichtgebrauchsstellung im wesentlichen vor den Sitzen 14 dieser ersten Sitzreihe 12, bezogen auf deren Gebrauchsstellung, auf dem Fahrzeugboden 19 befestigbar ausgebildet.

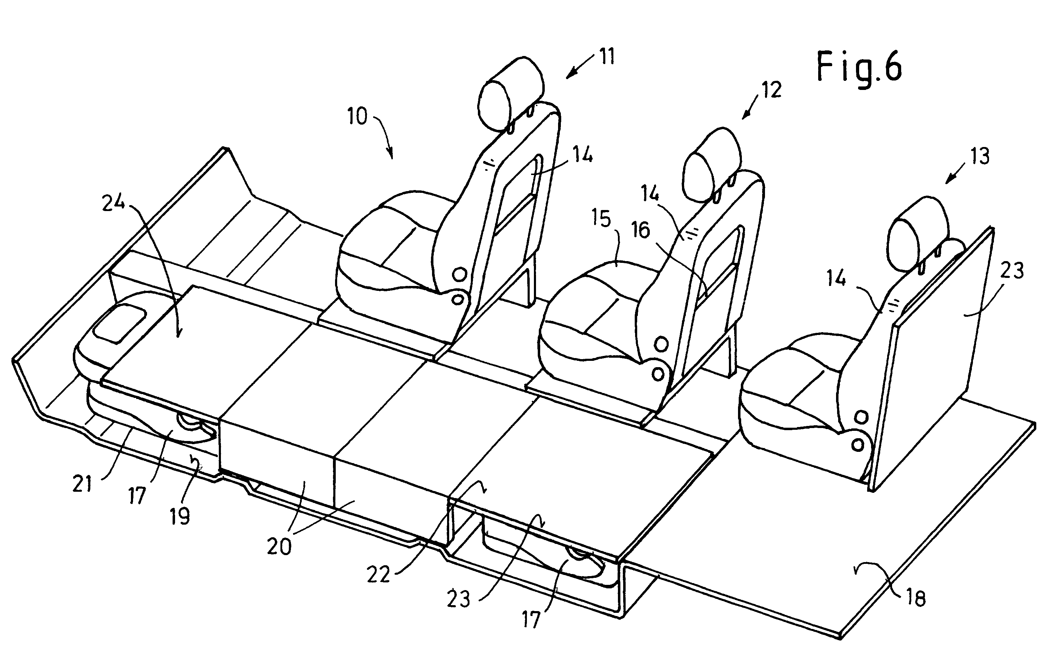

Bei dem dargestellten Ausführungsbeispiel der erfindungsgemäßen Sitzanordnung 10 ist im weiteren, siehe die Fig. 6 der Zeichnung, zur Abdeckung der Sitze 14 der ersten Sitzreihe 11 in ihrer zusammengeklappten Nichtgebrauchsstellung auf dem Fahrzeugboden 19 an dem entsprechenden Grundträgerelement 20 für den jeweils abgenommenen Sitz 14 der ersten Sitzreihe 11 eine entsprechend dimensionierte Verlängerungsplatte 24 ausgebildet. Eine solche Verlängerungsplatte 24 läßt sich auf einfache Weise in das bereits vorhandene Grundträgerelement 20 integrieren. In dem dargestellten Ausführungsbeispiel ist dabei die zur Abdeckung der Sitze 14 der ersten Sitzreihe 11 in ihrer zusammengeklappten Nichtgebrauchsstellung auf dem Fahrzeugboden 19 dienende Verlängerungsplatte 24 verschiebbar, und zwar in diesem Falle innenseitig verschiebbar, an dem entsprechenden Grundträgerelement 20 für den jeweils abgenommenen Sitz 14 gelagert. Es sind hier aber auch andere Lösungen vorgesehen, insb. ist denkbar, daß die zur Abdeckung der Sitze 14 der ersten Sitzreihe 11 in ihrer zusammengeklappten Nichtgebrauchsstellung auf dem Fahrzeugboden 19 dienende Verlängerungsplatte 24 verschwenkbar an dem entsprechenden Grundträgerelement 20 für den jeweils abgenommenen Sitz 14 gelagert ist.

Mit der erfindungsgemäßen Sitzanordnung 10 wird die variable Innenraumnutzung insb. für 6- Sitzer unter Erzielung eines ebenen Stauraumes durch Verstauung von 5 Sitzen 14 im Fahrzeug gegenüber den bekannten Lösungen stark vereinfacht bzw. verbessert, wobei bei Verstauung von 5 Sitzen praktisch ein ebener Stauraum im gesamten Innenraum des Fahrzeuges zur Verfügung steht.. Die zusammenklappbar ausgebildeten Sitze 14 der ersten und zweiten Sitzreihe 11,12 sind auf einfachen, i.w. in Längsrichtung verschiebaren Grundträgerelementen 20 angeordnet, sind von diesen leicht lösbar und auf dem Fahrzeugboden 19 befestigbar, so daß die Grundträgerelemente 20 über die zusammengeklappten Sitzelemente 17 verschoben werden können, wobei sie einerseits einen Stauraum 21 bzw. auch einen Schutz vor Verschmutzungen und Beschädigungen für diese bilden und andererseits oberseitig einen Teil des erweiterten Laderaumbodens 22 bilden. Diese Ausbildung ermöglicht eine hinsichtlich der Fahrzeugbreite und -höhe und des Fahrzeuggewichtes vorteilhaftere Ausbildung der betreffenden Fahrzeuge, wie z.B. Van's, ist einfach und kostengünstig herstellbar und einfach zu handhaben.

Aus Bild 7 ergibt sich einer weitere Ausführungsform der erfindungsgemäßen Sitzanordnung 10, bei der ein Sitz 14 der hinteren Sitzreihe 13 im nicht zusammengeklappten Zustand unter dem Grundträgerelement 20 der zweiten Sitzreihe 12 verstaut wird. Dabei bleibt die Rückseite 23 des Sitzes 14 aufrecht, so daß im verstauten Zustand die Rückseite 23 einen vorderen, vorwiegend vertikalen, Abschluß des Laderaumbodens 18 darstellt. Die Verstauung des Sitzes erfolgt, indem das Sitzelement 20 der zweiten Sitzreihe 12 nach vorne geschoben wird, der gelöste Sitz 14 der dritten Sitzreihe 13 auf den Fahrzeugboden 19 verbracht wird und dann das Sitzelement 20 wieder in seine ursprüngliche Ausgangslage zurückgeschoben wird. Dieser Vorgang läßt sich leicht und schnell durchführen und erlaubt somit eine kurzfristig Vergrößerung des Laderaumes ohne umständliches Ein- oder Ausladen des Sitzes 14.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insb. der allgemeine Aufbau der Sitzanordnung 10 eine von den Fig. der Zeichnung abweichende Ausgestaltung aufweisen, weiterhin denkbar sind insb. Abwandlungen der die Sitze 14 tragenden Grundträgerelemente 20 sowie der Sitze 14 selber. Schließlich ist eine Anwendung bei anderen als den angedeutet dargestellten Fahrzeugtypen vorgesehen, wie z. B. Geländewagen und allen Fahrzeugen, die generell höher als klassische Personenkraftwagen bauen.

## Patentansprüche

1. Sitzanordnung (10) für Fahrzeuge, insb. für Kraftfahrzeuge, mit drei hintereinander angeordneten, aus wenigstens zwei nebeneinander liegenden Sitzen (14) bestehenden Sitzreihen (11,12,13), wobei die Sitze (14) jeweils ein Sitzteil (15) und eine Rückenlehne (16) aufweisen, welche gelenkig miteinander verbunden sind, wobei die Rückenlehne (16) in verschiedenen, bevorzugt im wesentlichen vertikalen Gebrauchslagen verriegelbar bzw. arretierbar ist, bei der zur Vergrößerung des Laderaumes die Sitze (14) der beiden hinteren Sitzreihen (12,13) und, wahlweise, der/die Sitz(e) (14) der vorderen Sitzreihe (11), die nicht den Fahrersitz bilden, klappbar ausgebildet sind, wobei die zusammengeklappten Sitzelemente (17) aus ihrer Gebrauchsstellung für eine Sitzposition in ihre Nichtgebrauchsstellung für eine Beladungsposition überführbar ausgebildet sind, wobei die sich auf dem Laderaumboden (18) des Fahrzeuges befindlichen Sitze (14) der hinteren Sitzreihe (13) von einer Gebrauchsstellung auf dem Laderaumboden (18) in eine zusammengeklappte Nichtgebrauchsstellung auf dem Fahrzeugboden (19) überführbar ausgebildet sind,
**dadurch gekennzeichnet, daß**
die zusammenklappbaren Sitze (14) der ersten und zweiten Sitzreihe (11,12) auf im wesentlichen in Längsrichtung verschiebbaren Grundträgerelementen (20) angeordnet sind, wobei die zusammenklappbaren Sitzelemente (17) von den verschiebbaren Grundträgerelementen (20) leicht lösbar und auf dem Fahrzeugboden (19) fixierbar ausgebildet sind, und daß die Grundträgerelemente (20) über die zusammengeklappten auf dem Fahrzeugboden (19) fixierten Sitzelemente (17) der ersten und zweiten Sitzreihe (11,12) verschiebbar ausgebildet sind, wobei die Grundträgerelemente (20) dabei gleichzeitig einen Stauraum (21) für die zusammengeklappten Sitzelemente (17) der ersten und zweiten Sitzreihe (11,12) und, oberseitig, einen Teil des erweiterten Laderaumbodens (22) bilden.

2. Sitzanordnung nach Anspruch 1,
**dadurch gekennzeichnet, daß**
die zusammenklappbaren Sitze (14) der ersten und zweiten Sitzreihe (11,12) auf im wesentlichen in Längsrichtung verschiebbaren, baugleichen Grundträgerelementen (20) angeordnet sind.

3. Sitzanordnung nach Anspruch 1,
**dadurch gekennzeichnet, daß**
die Rückenlehnen (16) der Sitze (14) der hinteren Sitzreihe (13) auf ihrer Rückseite (23) eine im wesentlichen stabile Ausbildung aufweisen und in der zusammengeklappten Nichtgebrauchsstellung des Sitzes (14) einen Teil des erweiterten Laderaumbodens (24) bilden.

4. Sitzanordnung nach Anspruch 3,
**dadurch gekennzeichnet, daß**
die Sitze (14) der hinteren Sitzreihe (13) in ihrer zusammengeklappten Nichtgebrauchsstellung im wesentlichen hinter den Sitzen (14) der zweiten Sitzreihe (12), bezogen auf deren Gebrauchsstellung, auf dem Fahrzeugboden (19) befestigbar ausgebildet sind.

5. Sitzanordnung nach einem der Ansprüche 1 bis 4,
**dadurch gekennzeichnet, daß**
die Sitze (14) der zweiten Sitzreihe (12) in ihrer zusammengeklappten Nichtgebrauchsstellung im wesentlichen vor den Sitzen (14) dieser zweiten Sitzreihe (12), bezogen auf deren Gebrauchsstellung, auf dem Fahrzeugboden (19) befestigbar ausgebildet sind.

6. Sitzanordnung nach einem der Ansprüche 1 bis 5,
**dadurch gekennzeichnet, daß**
die Sitze (14) der ersten Sitzreihe (11) in ihrer zusammengeklappten Nichtgebrauchsstellung im wesentlichen vor den Sitzen (14) dieser ersten Sitzreihe (12), bezogen auf deren Gebrauchsstellung, auf dem Fahrzeugboden (19) befestigbar ausgebildet sind.

7. Sitzanordnung nach einem der Ansprüche 1 bis 6,
**dadurch gekennzeichnet, daß**
zur Abdeckung der Sitze (14) der ersten Sitzreihe (11) in ihrer zusammengeklappten Nichtgebrauchsstellung auf dem Fahrzeugboden (19) an dem entsprechenden Grundträgerelement (20) für den jeweils abgenommenen Sitz (14) der ersten Sitzreihe (11) eine entsprechend dimensionierte Verlängerungsplatte (24) ausgebildet ist.

8. Sitzanordnung nach Anspruch 7,
**dadurch gekennzeichnet, daß**
die zur Abdeckung der Sitze (14) der ersten Sitzreihe (11) in ihrer zusammengeklappten Nichtgebrauchsstellung auf dem Fahrzeugboden (19) dienende Verlängerungsplatte (24) verschiebbar an dem entsprechenden Grundträgerelement (20) für den jeweils abgenommenen Sitz (14) gelagert ist.

9. Sitzanordnung nach Anspruch 7,
**dadurch gekennzeichnet, daß**
die zur Abdeckung der Sitze (14) der ersten Sitzreihe (11) in ihrer zusammengeklappten Nichtgebrauchsstellung auf dem Fahrzeugboden (19) dienende Verlängerungsplatte (24) verschwenkbar an dem entsprechenden Grundträgerelement (20) für den jeweils abgenommenen Sitz (14) gelagert ist.

10. Sitzanordnung nach einem der vorherigen Ansprüche,
**dadurch gekennzeichnet, daß**
zumindest ein Sitz (14) der hinteren Sitzreihe (13) im nicht zusammengeklappten Zustand mit seinem Sitzteil (15) unter dem Grundträgerelement (20) der zweiten Sitzreihe (12) gelagert ist.

## Claims

1. Vehicle seat arrangement (10), in particular for motor vehicles, having three seat rows (11, 12, 13), which are arranged one behind another and comprise at least two seats (14) situated next to one another, the seats (14) each having a seat part (15) and a backrest (16) which are connected to one another in an articulated manner, the backrest (16) being lockable or retainable in various, preferably essentially vertical use positions, in which seat arrangement, in order to enlarge the loading area, the seats (14) of the two rear seat rows (12, 13) and, optionally, that/those seat(s) (14) of the front seat row (11) that do not form the driver's seat are of foldable design, the collapsed seat elements (17) being designed in a manner such that they can be transferred from their use position for a sitting position into their not-in-use position for a loading position, and those seats (14) of the rear seat row (13) that are situated on the loading-space floor (18) of the vehicle being designed in a manner such that they can be transferred from a use position on the loading-space floor (18) into a collapsed not-in-use position on the vehicle floor (19), **characterized in that** the collapsible seats (14) of the first and second seat rows (11, 12) are arranged on basic support elements (20) which can essentially be displaced in the longitudinal direction, the collapsible seat elements (17) being designed in a manner such that they can easily be detached from the displaceable basic support elements (20) and such that they can be fixed on the vehicle floor (19), and **in that** the basic support elements (20) are designed in a manner such that they can be displaced over the collapsed seat elements (17) of the first and second seat rows (11, 12), which seat elements are fixed on the vehicle floor, the basic support elements (20) in this case at the same time forming a storage space (21) for the collapsed seat elements (17) of the first and second seat rows (11, 12) and, on the upper side, forming part of the widened loading-space floor (22).

2. Seat arrangement according to Claim 1, **characterized in that** the collapsible seats (14) of the first and second seat rows (11, 12) are arranged on structurally identical basic support elements (20) which can essentially be displaced in the longitudinal direction.

3. Seat arrangement according to Claim 1, **characterized in that** the backrests (16) of the seats (14) of the rear seat row (13) have an essentially stable formation on their rear side (23) and, in the collapsed not-in-use position of the seat (14), form part of the widened loading-space floor (24).

4. Seat arrangement according to Claim 3, **characterized in that** the seats (14) of the rear seat row (13), in their collapsed not-in-use position, are designed, with reference to their use position, in a manner such that they can be fastened on the vehicle floor (19) essentially behind the seats (14) of the second seat row (12).

5. Seat arrangement according to one of Claims 1 to 4, **characterized in that** the seats (14) of the second seat row (12), in their collapsed not-in-use position, are designed, with reference to their use position, in a manner such that they can be fastened on the vehicle floor (19) essentially in front of the seats (14) of this second seat row.

6. Seat arrangement according to one of Claims 1 to 5, **characterized in that** the seats (14) of the first seat row (11), in their collapsed not-in-use position are designed, with reference to their use position, in a manner such that they can be fastened on the vehicle floor (19) essentially in front of the seats (14) of this first seat row (12).

7. Seat arrangement according to one of Claims 1 to 6, **characterized in that**, in order to cover the seats (14) of the first seat row (11) in their collapsed not-in-use position on the vehicle floor (19), a correspondingly dimensioned extension plate (24) is formed on the corresponding basic support element (20) for the respectively removed seat (14) of the first seat row (11).

8. Seat arrangement according to Claim 7, **characterized in that** the extension plate (24), which serves to cover the seats (14) of the first seat row (11) in their collapsed not-in-use position on the vehicle floor (19), is mounted displaceably on the corresponding basic support element (20) for the respectively removed seat (14).

9. Seat arrangement according to Claim 7, **characterized in that** the extension plate (24), which serves to cover the seats (14) of the first seat row (11) in their collapsed not-in-use position on the vehicle floor (19), is mounted pivotably on the corresponding basic support element (20) for the respectively removed seat (14).

10. Seat arrangement according to one of the preceding claims, **characterized in that** at least one seat (14) of the rear seat row (13), in the non-collapsed state, is mounted with its seat part (15) under the basic support element (20) of the second seat row (12).

## Revendications

1. Agencement de sièges (10) pour véhicules, en particulier pour véhicules automobiles, comprenant trois rangées de sièges (11, 12, 13) disposées les unes derrière les autres, constituées d'au moins deux sièges (14) juxtaposés, les sièges (14) présentant chacun une partie de siège (15) et un dossier (16) qui sont reliés l'un à l'autre de manière articulée, le dossier (16) pouvant être verrouillé ou bloqué dans différentes positions d'utilisation de préférence essentiellement verticales, où, pour augmenter l'espace de chargement, les sièges (14) des deux rangées de sièges arrière (12, 13) et, au choix, le ou les sièges (14) de la rangée de sièges avant (11) qui ne forment pas le siège du conducteur, sont réalisés de manière rabattable, les éléments de siège (17) rabattus étant réalisés de manière à pouvoir passer de leur position d'utilisation pour une position de siège dans leur position de non utilisation pour une position de chargement, les sièges (14) de la rangée de sièges arrière (13) se trouvant sur le fond de l'espace de chargement (18) du véhicule étant réalisés de manière à pouvoir passer d'une position d'utilisation sur le fond de l'espace de chargement (18) dans une position rabattue de non utilisation sur le fond du véhicule (19),
**caractérisé en ce que**
les sièges rabattables (14) des première et deuxième rangées de sièges (11, 12) sont disposés sur des éléments de support de base (20) déplaçables essentiellement dans la direction longitudinale, les éléments de sièges rabattables (17) étant réalisés de manière à pouvoir être aisément détachés des éléments de support de base déplaçables (20) et à être fixés sur le fond du véhicule (19), et **en ce que** les éléments de support de base (20) sont réalisés de manière à pouvoir être déplacés par-dessus les éléments de siège (17) des première et deuxième rangées de sièges (11, 12), rabattus et fixés sur le fond du véhicule (19), les éléments de support de base (20) formant en l'occurrence simultanément un espace de rangement (21) pour les éléments de siège rabattus (17) des première et deuxième rangées de sièges (11, 12) et, du côté supérieur, une partie du fond agrandi de l'espace de chargement (22).

2. Agencement de sièges selon la revendication 1,
**caractérisé en ce que**
les sièges rabattables (14) des première et deuxième rangées de sièges (11, 12) sont disposés sur des éléments de support de base (20) de construction identique, déplaçables essentiellement dans la direction longitudinale.

3. Agencement de sièges selon la revendication 1,
**caractérisé en ce que**
les dossiers (16) des sièges (14) de la rangée de sièges arrière (13) présentent sur leur côté arrière (23) une réalisation essentiellement stable et forment dans leur position de non utilisation rabattue du siège (14) une partie du fond agrandi de l'espace de chargement (24).

4. Agencement de sièges selon la revendication 3,
**caractérisé en ce que**
les sièges (14) de la rangée de sièges arrière (13) sont réalisés de manière à pouvoir être fixés sur le fond du véhicule (19) dans leur position de non utilisation rabattue essentiellement derrière les sièges (14) de la deuxième rangée de sièges (12), par rapport à leur position d'utilisation.

5. Agencement de sièges selon l'une quelconque des revendications 1 à 4,
**caractérisé en ce que**
les sièges (14) de la deuxième rangée de sièges (12) sont réalisés de manière à pouvoir être fixés sur le fond du véhicule (19) dans leur position de non utilisation rabattue essentiellement devant les sièges (14) de cette deuxième rangée de sièges (12), par rapport à leur position d'utilisation.

6. Agencement de sièges selon l'une quelconque des revendications 1 à 5,
**caractérisé en ce que**
les sièges (14) de la première rangée de sièges (11) sont réalisés de manière à pouvoir être fixés sur le fond du véhicule (19) dans leur position de non utilisation rabattue essentiellement devant les sièges (14) de cette première rangée de sièges (11), par rapport à leur position d'utilisation.

7. Agencement de sièges selon l'une quelconque des revendications 1 à 6,
**caractérisé en ce que**
pour le recouvrement des sièges (14) de la première rangée de sièges (11) dans leur position de non utilisation rabattue sur le fond du véhicule (19), une plaque de prolongation (24) de dimension correspondante est réalisée sur l'élément de support de base correspondant (20) pour le siège respectif enlevé (14) de la première rangée de sièges (11).

8. Agencement de sièges selon la revendication 7,
**caractérisé en ce que**
la plaque de prolongation (24) servant à recouvrir les sièges (14) de la première rangée de sièges (11) dans leur position de non utilisation rabattue sur le fond du véhicule (19) est montée de manière à pouvoir être déplacée sur l'élément de support de base correspondant (20) pour chaque siège enlevé (14).

9. Agencement de sièges selon la revendication 7,
**caractérisé en ce que**
la plaque de prolongation (24) servant à recouvrir les sièges (14) de la première rangée de sièges (11) dans leur position de non utilisation rabattue sur le fond du véhicule (19) est montée de manière à pouvoir être pivotée sur l'élément de support de base correspondant (20) pour chaque siège enlevé (14).

10. Agencement de sièges selon l'une quelconque des revendications précédentes,
**caractérisé en ce**
**qu'**au moins un siège (14) de la rangée de sièges arrière (13) est monté dans l'état non rabattu avec sa partie de siège (15) sous l'élément de support de base (20) de la deuxième rangée de sièges (12).
